# EUROPEAN PATENT APPLICATION

(11) **EP 2 871 032 A1**
(43) Date of publication of application: **13.05.2015**
(21) Application number: 14189087.1
(22) Date of filing: 15.10.2014
(51) Int. Cl.: B26D 1/38, B26D 3/00, B29B 15/02

(54) **Method and device for cutting rubber bale**

(30) Priority: 07.11.2013 JP 2013231524
(71) Applicant: Suzuka Engineering Co., Ltd, Yokkaichi city, Mie 510-0951 (JP)
(72) Inventor: Yada, Yasuo, Yokkaichi, Mie 512-1111 (JP); Yada, Tatsuo, Yokkaichi, Mie 510-0958 (JP)
(74) Representative: Maury, Richard Philip

(57) **Abstract**

The invention is related to a rubber bale cutting method and a device.

A horizontally positioned cylindrical fixed barrel 2 is provided with barrel side supply ports 21A, 21B for a rubber bale, the barrel side supply ports 21A, 21B being disposed on a pair of barrel walls of the cylindrical fixed barrel 2, and an ejection port 22 for a rubber cut piece disposed on a lower part of the barrel, and an in-barrel rotary member 3 which rotates while being in internal contact with the cylindrical fixed barrel is provided with an inner supply ports 35 which receive the rubber bale when they oppose the barrel side supply port as the in-barrel rotary member 3 makes a half turn. A rotary blade 32 for cutting the rubber bale is disposed on the rim of the barrel side supply port.

## Description

### [Technical Field]

The present invention relates to methods and devices for cutting rubber bales for successively cutting a rubber polymer material formed in an international standard size, and more specifically, to methods and devices for cutting rubber bales which allow for successive cutting of the rubber polymer material and easy connection to an automatic measuring device as well as energy saving and high productivity.

### [Background Art]

When rubber bales are measured and inputted into a kneader, a cutting operation for adjusting the weight depending on a predetermined compounding ratio is necessary. Generally, guillotine type cutters driven by a hydraulic thrust have been used to size and cut the rubber bales, or an operator has measured each of the bales for sizing and cutting. In some cases, cutters provided with an automatic length measuring mechanism have also been used. Although the rubber bales can be cut in such ways, it is difficult to refine the measurement precision for kneading since the weight of a single rubber cut piece is too large.

A rubber polymer material has elasticity and viscosity and is a so-called "hard-to-cut material." As a practical cutting device for cutting such a material, a guillotine type cutter having the above hydraulic thrust has been commonly used. However, a hydraulic cylinder needs a reciprocating motion for each cutting operation, and a period of time for each cutting operation is determined by a period of time of reciprocation of the hydraulic cylinder. In addition, as known for the conventional guillotine type cutters, when a cutting blade cuts into a thick rubber layer, a large thrust is necessary against a friction resistance which is caused by adhesiveness between the rubber layer to be cut and the surface of the cutting blade. Although a thin cutting blade may cut into the rubber with a small thrust, a small thickness of a blade for cutting a thick rubber may degrade a blade rigidity and is not practical.

Further, an attempt has been made to reduce the thickness of cut piece in order to reduce a weight of the cut piece and facilitate adjustment of measuring. However, since the cutting blade has a large thickness, the blade escapes and digs into the cutting end face of the rubber bale. As a result, the rubber bale fails to be cut in substantially a constant thickness like slices of bread, and the thickness of the cut piece cannot be smaller than a certain limit, which is not suitable for fine adjustment of weight measurement. In addition, as the cut pieces are thinner, the number of cutting operations increases, resulting in a significant decrease in productivity.

Moreover, in rubber cutting by conventional guillotine type cutters, an automatic measurement with a fine weight precision is difficult and there are no cutters in practical use. Although it may be possible if the rubber can be cut in a thin cut piece with a single cutting operation, it is difficult to cut a thin cut piece across the bale thickness since the blade escapes and digs into the cutting end face of the rubber at the cutting position of the rubber as described above.

Further, a fine amount of the cut piece which is necessary in automatic measurement is effective for maintaining the accuracy of compounding ratio in improvement of measurement precision, and it is known that cutting of the whole amount of rubber in one batch of kneading may significantly reduce the electric consumption of the kneader to be used, may save the kneading time, and may be effective for a low temperature kneading. Accordingly, since high speed cutting is necessary, rubber cutting by the conventional guillotine type cutter needs to be drastically improved. In view of such a problem, for example, Patent Literature 1 and Patent Literature 2 disclose cutting method and device by rotating a cutting blade. However, those are not necessarily satisfactory with regard to reduction of friction resistance caused by adhesiveness between the rubber layer to be cut and the surface of the cutting blade, improvement in successive cutting of rubber polymer material, saving of energy and increase of productivity.

Further, although crash type particle refining devices have been used in the example of connection to an automatic measurement device, they are not so commonly used since they need expensive investment amount, the temperature may be increased depending on properties of rubber due to repeated stirring by a rotary cutter in the particle refining device, which causes the rubber to be blocked and wound around the rotary cutter, to fail of being ejected through a wiring mesh, to apply a braking effect, and to fail of being crushed due to an insufficient rotation. Further, a large labor may be necessary to remove the block of rubber wound around the rotary cutter.

As described above, successive automatic cutting of the rubber bale is not easy, and there is no machine in practical use that is capable of lineup even in a small kneading process and no device that operates in conjunction with a measuring device that measures the weight of the rubber cut piece and feeds the measured rubber cut piece.

### [Citation List]

### [Patent Literature]

[PTL 1] Japanese Unexamined Patent Application Publication No. 2013-111682
[PTL 2] Japanese Unexamined Patent Application Publication No. 48-100781

### [Summary of Invention]

### [Technical Problem]

The technical object of the present invention is to provide rubber bale cutting method and device which is capable of successive cutting of the rubber bales in a constant or controlled thickness while saving energy and increasing the speed, significant improvement in productivity, cutting with low cost, and easy connection to a measuring feeder that measures the weight of the rubber cut piece and feeds the measured cut piece.

### [Solution to Problem]

In order to solve the above problem, a rubber bale cutting method according to the present invention, wherein one or a plurality of barrel side supply ports for supplying a rubber bale to be cut is disposed on a side face of a barrel wall of a cylindrical fixed barrel having a horizontally positioned axis, and the cylindrical fixed barrel is provided with an ejection port for a rubber cut piece on a lower part of the barrel, and an in-barrel rotary member which rotates by a rotation drive mechanism while being in internal contact with the cylindrical fixed barrel, the in-barrel rotary member is provided with an inner supply port for receiving the rubber bale from the barrel side supply port when it opposes the barrel side supply port as the in-barrel rotary member rotates in the cylindrical fixed barrel, and a rotary blade for cutting the rubber bale which is fed into the in-barrel rotary member via the inner supply port is disposed on the rim of the inner supply port on a side which follows the movement of the inner supply ports during rotation of the in-barrel rotary member so that the rotary blade opposes the receiving blade which is disposed on the rim of the barrel side supply port on the side that the rotary blade comes closer after passing the inner side of the barrel side supply port of the cylindrical fixed barrel, and the rubber bale is supplied from the barrel side supply port of the cylindrical fixed barrel and the in-barrel rotary member is rotated in the cylindrical fixed barrel by the rotation drive mechanism, and when the in-barrel rotary member rotates, the rubber bale supplied from the barrel side supply port of the cylindrical fixed barrel is cut while being shaved off by a rotary blade which rotates along an inner cylindrical surface of the barrel side supply port, and the rubber cut pieces which have been cut off is sequentially ejected from the ejection port of the cylindrical fixed barrel is provided.

Further, in order to solve the above problem, a rubber bale cutting device according to the present invention, wherein a cylindrical fixed barrel having a horizontally positioned axis is provided as an outer barrel and is provided with one or a plurality of barrel side supply ports for supplying a rubber bale to be cut disposed on a side face of a barrel wall and an ejection port for a rubber cut piece on a lower part of the barrel, an in-barrel rotary member which is connected to a rotation drive mechanism and rotates while being in internal contact with the cylindrical fixed barrel is provided with an inner supply port for receiving the rubber bale from the barrel side supply port when it opposes the barrel side supply port as the in-barrel rotary member rotates in the cylindrical fixed barrel, and a rotary blade for cutting the rubber bale which is fed into the in-barrel rotary member via the inner supply port is disposed on the rim of the inner supply port on a side which follows the movement of the inner supply ports during rotation of the in-barrel rotary member, and a receiving blade which opposed the rotary blade is disposed on the rim of the barrel side supply port on the side that the rotary blade comes closer after passing the inner side of the barrel side supply port of the cylindrical fixed barrel, so that the rubber bale supplied from the barrel side supply port can be cut while being shaved off by a rotary blade which rotates along an inner cylindrical surface of the barrel side supply port of the cylindrical fixed barrel while the in-barrel rotary member rotates, and a rubber bale supplying mechanism for supplying the rubber bale to be cut into the barrel side supply port is disposed on the outer side of the barrel side supply port of the cylindrical fixed barrel is provided.

In the above described cutting method and device according to the present invention, one or a plurality of barrel side supply ports for supplying a rubber bale to be cut is disposed on a side face of a barrel wall of the cylindrical fixed barrel, and the in-barrel rotary member which rotates while being in internal contact with the cylindrical fixed barrel is disposed in the cylindrical fixed barrel, one or a plurality of inner supply ports for receiving the rubber bale from the barrel side supply port when it opposes the barrel side supply port as the in-barrel rotary member rotates is disposed in the in-barrel rotary member, and the rotary blade for cutting the rubber bale is disposed on the rim of the inner supply port, so that the rubber bale supplied from the barrel side supply port of the cylindrical fixed barrel can be cut by rotation of the in-barrel rotary member in the cylindrical fixed barrel while being shaved off by the rotary blade which rotates along an inner cylindrical surface of the barrel side supply port.

In cutting of the rubber bale, as described above, as the cutting blade escapes to the cutting end face of the rubber layer when the cutting blade of the guillotine type cutter cuts in the thick rubber layer, a force acts from the rubber bale to the rotary blade to press the rotary blade against the cutting end face of the rubber bale, and the rotary blade does not resist the force from the rubber bale and moves along the cylindrical inner surface of the barrel side supply port to the cutting end face of the rubber bale. Accordingly, the friction resistance generated when the rotary blade cuts into the rubber bale is significantly reduced, and accordingly, the rubber bale is cut by the rotary blade which rotates inside the barrel side supply port as if being shaved off by a plane, and the rubber cut piece is scraped and peeled off. Accordingly, a drive force for cutting is significantly reduced, high speed cutting is possible, and the rubber cut pieces of high weight precision can be successively obtained in high speed.

In a preferred embodiment of the rubber bale cutting method according to the present invention, the barrel side supply ports for the rubber bale of the cylindrical fixed barrel are disposed on a pair of opposed barrel walls, the in-barrel rotary member is provided with the inner supply port for receiving the rubber bale from the barrel side supply ports when they oppose a pair of barrel side supply ports as the in-barrel rotary member makes a half turn in the cylindrical fixed barrel, and the rubber bale is supplied from the pair of barrel side supply ports of the cylindrical fixed barrel and the rubber bale supplied from the barrel side supply ports which oppose the cylindrical fixed barrel while the in-barrel rotary member makes a half turn by the rotation drive mechanism.

Further, in a preferred embodiment of the rubber bale cutting device according to the present invention, the barrel side supply ports for the rubber bale of the cylindrical fixed barrel are disposed on a pair of barrel walls, and the in-barrel rotary member is provided with the inner supply port for receiving the rubber bale from the barrel side supply ports when they oppose a pair of barrel side supply ports as the in-barrel rotary member makes a half turn in the cylindrical fixed barrel, and the rubber bale supplying mechanism is disposed on the outer side of the pair of barrel side supply port of the cylindrical fixed barrel.

In a preferred embodiment of the cutting method and device according to the present invention, since the pair of inner supply port for receiving the rubber bale when they oppose the pair of barrel side supply ports are disposed on the in-barrel rotary member which rotates while being in internal contact with the cylindrical fixed barrel on which the barrel side supply port for the rubber bale is disposed on the pair of opposed barrel walls, and the rotary blades are disposed on the rim of the inner supply port on the side which follows the movement of the inner supply ports during rotation of the in-barrel rotary member, cutting of a pair of rubber bale which are supplied from the outer side of the barrel side supply port of the cylindrical fixed barrel can be efficiently performed by rotation of a single in-barrel rotary member.

Further, in a preferred embodiment of the rubber bale cutting method according to the present invention, the rubber bale supplying mechanism for supplying the rubber bale to be cut into the barrel side supply port is disposed on the outside of the barrel side supply port of the cylindrical fixed barrel, and the rubber bale of a predetermined length is supplied into the in-barrel rotary member when the barrel side supply port for the rubber bale of the cylindrical fixed barrel overlaps the inner supply port of the in-barrel rotary member by intermittently driving a conveyer which forms the rubber bale supplying mechanism and becomes a state in which the rubber bale can be supplied into the in-barrel rotary member, and after that, the rubber bale is cut by the rotary blade of the in-barrel rotary member in the state in which the supply of the rubber bale stops.

Further, in a preferred embodiment of the rubber bale cutting device according to the present invention, the drive mechanism of the conveyer which forms the rubber bale supplying mechanism is capable of controlling the intermittent driving, and the rubber bale of a predetermined length is supplied into the in-barrel rotary member when the barrel side supply port for the rubber bale of the cylindrical fixed barrel overlaps the inner supply port of the in-barrel rotary member by intermittently driving a conveyer which forms the rubber bale supplying mechanism and becomes a state in which the rubber bale can be supplied into the in-barrel rotary member, and after that, the supply of the rubber bale stops while the rubber bale supplied by rotation of the in-barrel rotary member is cut.

As described above, when the drive mechanism of the conveyer which forms the rubber bale supplying mechanism is intermittently driven, the rubber bale can be cut in a fixed state not while being supplied, and the friction resistance generated when the rotary blade cuts into the rubber bale can be reduced. Since supply of the rubber bale and cutting of the rubber bale performed by rotation of the rotary blade of the in-barrel rotary member are alternatively performed, the cutting speed of the rubber bale becomes slow. However, decrease in cutting speed of the rubber bale can be minimized by appropriately setting the drive speed of the drive mechanism of the conveyer and the rotation speed of the rotary blade of the in-barrel rotary member.

Further, the friction resistance of the rotary blade cutting into the rubber bale can also be reduced, not by intermittently driving the drive mechanism of the conveyer, but also by increasing the rotation speed of the rotary blade of the in-barrel rotary member as possible.

In another preferred embodiment of the rubber bale cutting device according to the present invention, the barrel side supply ports for the rubber bale of the cylindrical fixed barrel are disposed on a pair of opposed barrel walls, the in-barrel rotary member is provided with the inner supply port for receiving the rubber bale from the barrel side supply ports at each of three equally spaced positions when they oppose a pair of barrel side supply ports as the in-barrel rotary member makes a one third turn in the cylindrical fixed barrel and the rotary blade is disposed on the rim of the inner supply port on a side which follows the movement of the inner supply ports, and the rubber bale supplying mechanism is disposed on the outer side of the pair of barrel side supply ports of the cylindrical fixed barrel.

Further, in a preferred embodiment of the rubber bale cutting device according to the present invention, the rotation drive mechanism of the in-barrel rotary member is formed of a mechanism that converts a reciprocating thrust of the fluid pressure cylinder into a rotational movement via the crank mechanism, and the crank mechanism is connected to the in-barrel rotary member so as to transmit the rotation with dead points provided when a pair of rotary blade are located at the top and bottom of the in-barrel rotary member.

When the rotation drive mechanism of the in-barrel rotary member in the rubber bale cutting device is configured by such a crank mechanism, the maximum thrust between the top and bottom dead points of the crank mechanism can be effectively used for cutting of the rubber bale at the barrel side supply port for the rubber bale on the pair of opposed barrel wall on the cylindrical fixed barrel.

In another preferred embodiment of the rubber bale cutting device according to the present invention, the rubber bale supplying mechanism which is provided on the outer side of the barrel side supply port of the cylindrical fixed barrel is formed of a pair of upper and lower conveyers that supplies the rubber bale to the barrel side supply port while holding the rubber bale from upper and lower sides. In this case, it is desirable that, in the pair of upper and lower conveyers that forms the rubber bale supplying mechanism, one of the conveyers is provided as a driving conveyer which has a drive mechanism that is driven in a direction of supplying the rubber bale, and the other of the conveyers is provided as a driven conveyer which moves as movement of the rubber bale.

As described above, when the rubber bale to be supplied is cut while being pressurized and held from the upper and lower sides, the rubber bale can be held and cut in a stable manner regardless of the thickness, and when one of the pair of upper and lower conveyers moves the rubber bale in the supply direction and the other of the conveyers is a driven conveyer that is movable along with the movement of the rubber bale, it is possible to stabilize the movement state of movement position of the rubber bale and cut the rubber bale in a predetermined thickness in a stable manner.

In still another preferred embodiment of the rubber bale cutting device according to the present invention, a drive mechanism of the conveyer and/or a rotation drive mechanism of the in-barrel rotary member is each capable of adjusting an intermittent driving or adjusting a speed, thereby adjusting a thickness of the rubber cut pieces and a cutting speed. Further, a measuring feeder for measuring a weight of the rubber cut piece ejected from the ejection port can be disposed immediately under the ejection port for the rubber cut piece on the lower part of the cylindrical fixed barrel.

With this configuration, it is possible to obtain the remaining weight necessary for obtaining a desired compound amount of the rubber cut pieces based on the weight of the rubber cut pieces measured by the measurement device and control the cutting device to cut only the necessary weight by adjusting the thickness or the like of the rubber cut piece.

Further, as described above, the configuration in which the barrel side supply ports for the rubber bale to be cut are disposed on the pair of opposed barrel walls of the cylindrical fixed barrel having the horizontally positioned axis, and the ejection port for the rubber cut pieces are disposed on the lower part of the barrel is advantageous in providing the measurement device for measuring the weight of the rubber cut pieces which have been cut immediately under the ejection port. Accordingly, it is possible to ensure successive cutting of the polymer material, facilitate supply of the rubber cut pieces to an automatic measurement device, and achieve high productivity while saving energy.

### [Advantageous Effects of Invention]

According to the above described rubber cutting method and device according to the present invention, it is possible to perform successive cutting of the rubber bales in a constant or controlled thickness while saving energy and increasing the speed, and significantly improve productivity, reduce the cost for cutting, and allow for easy connection to an automatic measurement device that measures the weight of the rubber cut pieces and feeds the measured cut pieces.

### [Brief Description of Drawings]

[Fig. 1] Fig. 1 is a general configuration view of a rubber bale cutting device in a thick rubber bale supplying state according to the present invention.
[Fig. 2] Fig. 2 is a general configuration view of the rubber bale cutting device in a thin rubber bale supplying state according to the present invention.
[Fig. 3] Fig. 3 is an essential part transverse sectional view of a cylindrical fixed barrel, an in-barrel rotary member and the like in the rubber bale cutting device taken along the cross section perpendicular to their center axes.
[Fig. 4] Fig. 4 is an essential part sectional view of a cylindrical fixed barrel, an in-barrel rotary member and the like in the rubber bale cutting device taken along the vertical cross section along their center axes.
[Fig. 5] Fig. 5 is an explanatory view of a rotation cutting operation which shows start of cutting by a rotary blade at the leading end portion of the rubber bale supplied into the cylindrical fixed barrel by a rubber bale supplying mechanism.
[Fig. 6] Fig. 6 is an explanatory view which shows a state during the cutting.
[Fig. 7] Fig. 7 is an explanatory view which shows end of the cutting.
[Fig. 8] Fig. 8 is an essential part sectional view which shows that three inner supply ports are provided with an equal interval around the in-barrel rotary member in the above example.

### [Description of Embodiments]

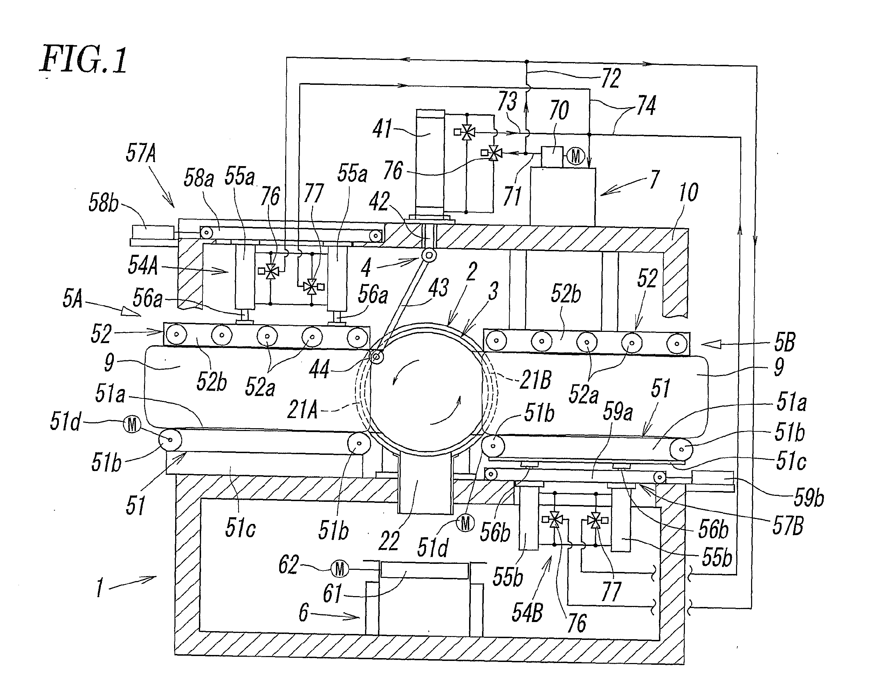

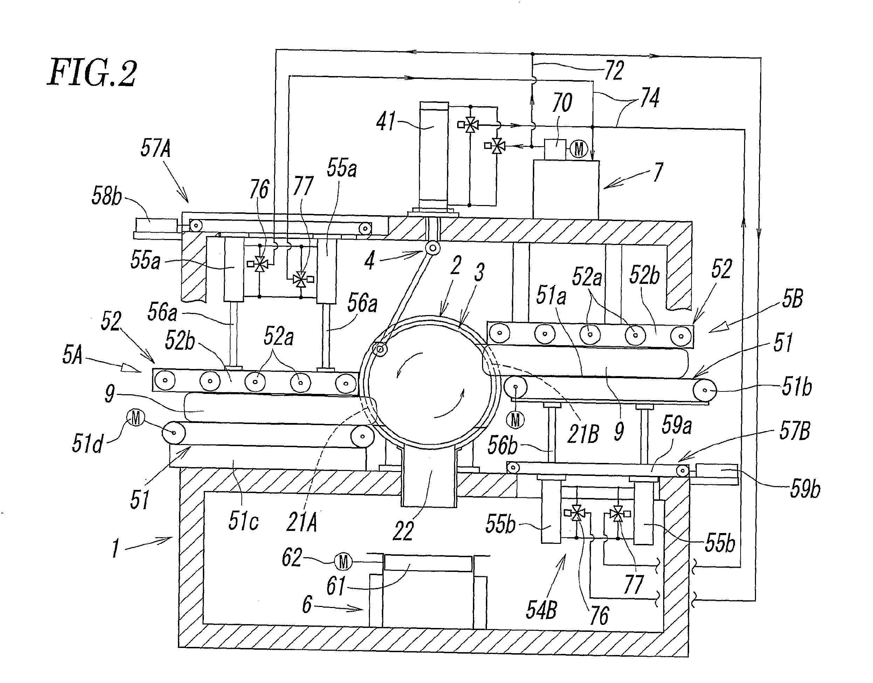

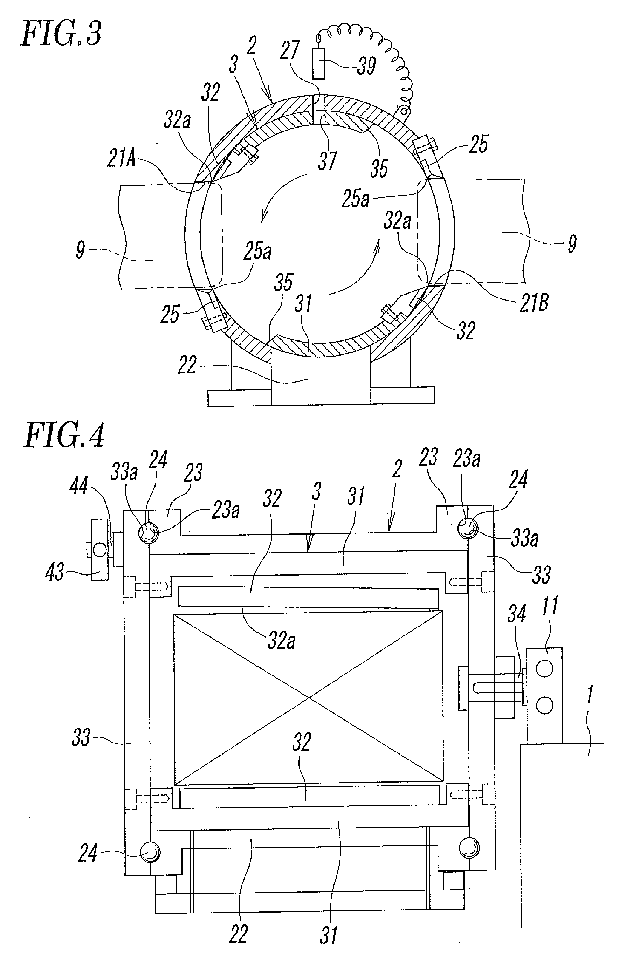

Figs. 1 and 2 are views which schematically show a general configuration of an example of a rubber bale cutting device in a thick rubber bale supplying state and a thin rubber bale supplying state according to the present invention. In an essential part of the rubber bale cutting device, a cylindrical fixed barrel 2 is fixed on a base 1 with the axis as an outer barrel being horizontally positioned as will be described later with reference to Figs. 3 and 4, and the cylindrical fixed barrel 2 has barrel side supply ports 21A, 21B for supplying a rubber bale 9 to be cut which are disposed on a pair of opposed side faces of a barrel wall located perpendicular to the center axis of the cylindrical fixed barrel 2 and an ejection port 22 for ejecting rubber cut pieces which is disposed on a lower part of the barrel. Further, an in-barrel rotary member 3 is connected to a rotation drive mechanism 4 having a drive source such as an oil-hydraulic cylinder and is rotatably supported by the cylindrical fixed barrel 2 so as to be in internal contact with the cylindrical fixed barrel 2 and rotate about the same axis as that of the cylindrical fixed barrel 2.

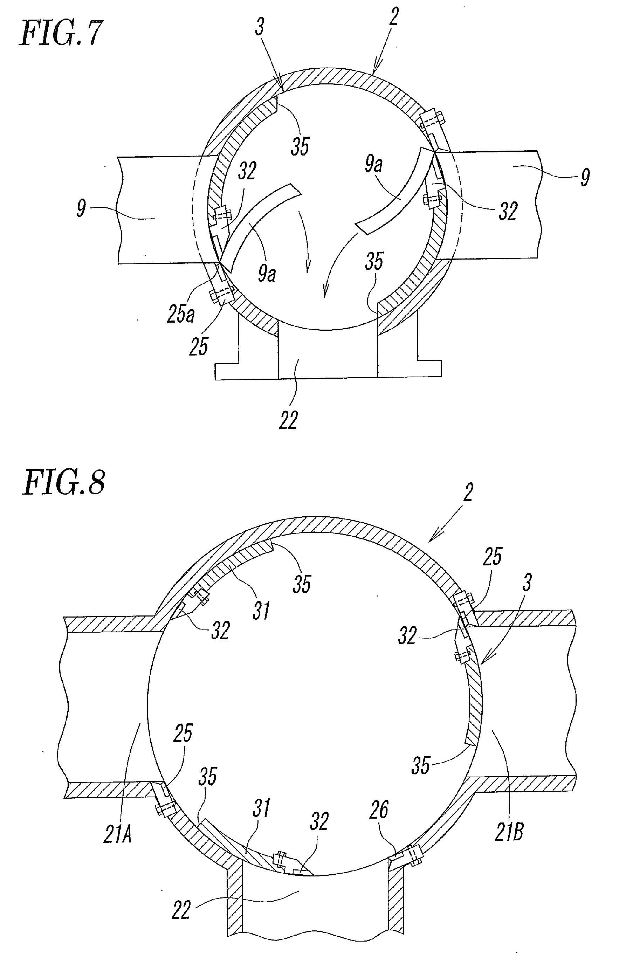

Further, rubber bale supplying mechanisms 5A, 5B are disposed on the outer side of the pair of barrel side supply ports 21A, 21B of the cylindrical fixed barrel 2 so as to supply the rubber bale 9 to be cut toward inside of the inner side of the barrel side supply ports 21A, 21B. The pair of barrel side supply ports 21A, 21B of the cylindrical fixed barrel 2 are disposed in a range of the equal angle about the center axis of the cylindrical fixed barrel 2, and the barrel side supply ports 21A, 21B and the rubber bale supplying mechanisms 5A, 5B are disposed such that the center of thickness of the rubber bale 9 having a standard thickness which is supplied by the rubber bale supplying mechanisms 5A, 5B from both sides of the cylindrical fixed barrel 2 horizontally traverses the center axis of the cylindrical fixed barrel 2. Further, a space is provided immediately under the ejection port 22 for rubber cut pieces 9a (Fig. 7) disposed on the lower part of the barrel, which will be described later, so that a measuring feeder 6 that measures the weight of the rubber cut pieces 9a ejected from the ejection port 22 and feeds them is installed. The details of the rubber bale supplying mechanisms 5A, 5B and the measuring feeder 6 will be described later.

Structural relationship of the cylindrical fixed barrel 2 and the in-barrel rotary member 3 will be more specifically described. As clearly shown in Figs. 3 and 4, the cylindrical fixed barrel 2 includes flanges 23 on the outer periphery on both ends in the axis direction, and the in-barrel rotary member 3 has a frame body 31 on which a rotary blade 32 is mounted, which will be described later, that is inserted in the cylindrical fixed barrel 2, which has the barrel side supply ports 21A, 21B, to be rotatable about the same center axis as that of the cylindrical fixed barrel 2, and a pair of rotary plates 33 disposed on both ends are rotatably supported by the external surface of the peripheral flanges 23 disposed on both end of the cylindrical fixed barrel 2.

That is, the pair of rotary plates 33 which are each in external contact with the flanges 23 on both ends of the cylindrical fixed barrel 2 are screwed to the both ends of the frame body 31 of the in-barrel rotary member 3 in the axis direction. The peripheral portions of the rotary plates 33 are disposed to face the external surfaces of the outer peripheral flanges 23 of the cylindrical fixed barrel 2, and bearing grooves 23a, 33a that house a plurality of bearing balls 24 in a rotatably manner are formed on a concentric circumference on the opposed surfaces such that rolling bearings which are formed by the bearing grooves 23a, 33a housing the bearing balls 24 guide the rotation of the in-barrel rotary member 3 with respect to the cylindrical fixed barrel 2. Further, the in-barrel rotary member 3 has a support shaft 34 fixed at the center of the outer surface of the rotary plate 33 which is mounted on one end of the in-barrel rotary member 3 and the support shaft 34 is supported by a bearing 11 mounted on the base 1.

The in-barrel rotary member 3 includes a pair of inner supply ports 35 corresponding to the pair of barrel side supply ports 21A, 21B of the cylindrical fixed barrel 2 for receiving the rubber bale 9 supplied from the rubber bale supplying mechanisms 5A, 5B. Each of the inner supply ports 35 alternatively face each of the pair of barrel side supply ports 21A, 21B as the in-barrel rotary member 3 makes a half turn in the cylindrical fixed barrel 2 to receive the rubber bale 9 from the barrel side supply ports 21A, 21B. Further, rotary blades 32 for cutting the rubber bale 9 which is fed into the in-barrel rotary member 3 via the inner supply ports 35 are disposed on the rim of the inner supply port 35 on the side which follows the movement of the inner supply ports 35 during rotation of the in-barrel rotary member 3. Accordingly, a blade edge 32a of the rotary blade 32 is fixedly held while being oriented in a forward rotation direction of the in-barrel rotary member 3. Further, receiving blades 25 are disposed on the rim of the barrel side supply ports 21A, 21B on the side that the rotary blades 32 of the in-barrel rotary member 3 come closer after they passed the inner side of the barrel side supply ports 21A, 21B of the cylindrical fixed barrel 2 so that the receiving blades 25 face the rotary blades 32.

As shown in Fig. 4, the entire blade edges 32a of the rotary blades 32 are inclined to the rubber bales 9 to be cut, and this inclination generates a time difference in start of cutting the rubber bale 9 by each portion of the blade edges 32a of the rotary blades 32, and accordingly, variation of a drive force for cutting the rubber bale 9 can be reduced.

Further, the cylindrical fixed barrel 2 and the in-barrel rotary member 3 are configured such that lock pin holes 27, 37 formed on the cylindrical fixed barrel 2 and the in-barrel rotary member 3, respectively, are aligned with each other when the barrel side supply ports 21A, 21B of the cylindrical fixed barrel 2 and the inner supply ports 35 of the in-barrel rotary member 3 are aligned with each other, and rotation of the in-barrel rotary member 3 is locked by inserting a lock pin 39 into those lock pin holes. With this configuration, for example, a removal operation of the rubber cut pieces 9a which are too large to be ejected or an internal inspection of the in-barrel rotary member 3 can be safely performed. In order to perform those operations, it is necessary for the rubber bale supplying mechanisms 5A, 5B to be temporarily removed from their installed positions.

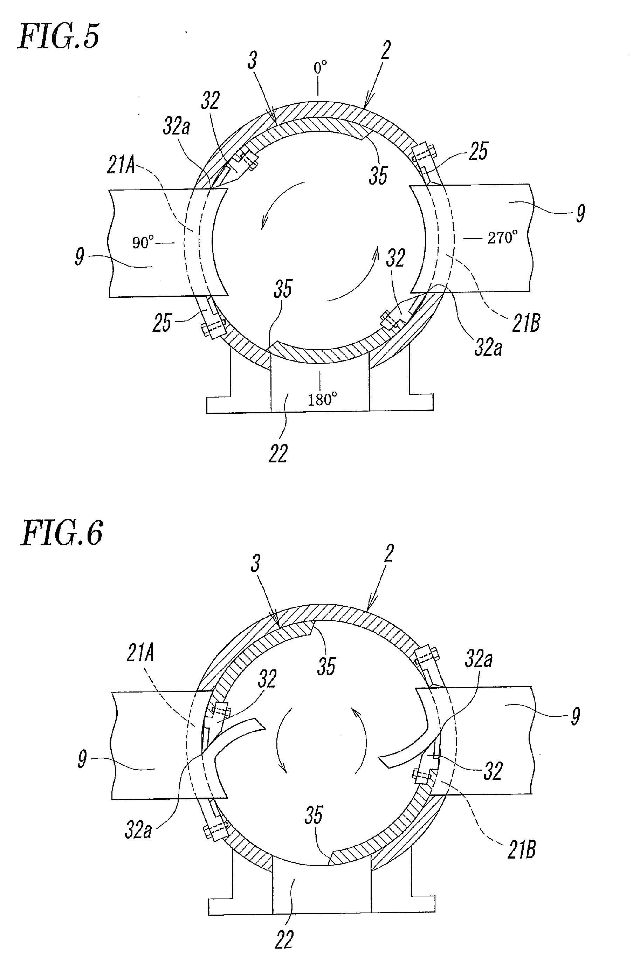

Although the pair of inner supply ports 35 of the in-barrel rotary member 3 are openings for receiving the rubber bales 9 from the barrel side supply ports 21A, 21B as described above, those inner supply ports 35 are also used for ejecting the rubber cut pieces 9a cut by the rotary blades 32 via the ejection port 22 formed on the cylindrical fixed barrel 2 as seen from Figs. 5 to 7. Accordingly, the inner supply ports 35 per se are not formed as the same shape as that of the barrel side supply ports 21A, 21B. Instead, they are formed larger than that so as to be suitable for ejecting the rubber cut pieces 9a cut by the rotary blades 32 through the ejection port 22. Further, in order to ensure ejection of the rubber cut pieces 9a, no component such as a rotation shaft which may disturb ejection of the rubber cut pieces 9a is provided inside the frame body 31 of the in-barrel rotary member 3. Accordingly, since a substantially hollow structure is provided, ejection of the rubber cut pieces 9a is not prevented. Particularly, it is necessary to configure the inner supply port 35 to be located under the cylindrical fixed barrel 2 during ejection of rubber cut pieces 9a and to size the inner supply port 35 suitable in relation to the size of the rubber cut pieces 9a so that smooth ejection of the rubber cut pieces 9a is performed.

Further, as described above, the in-barrel rotary member 3 is configured such that the support shaft 34 fixed at the center of the outer surface of the rotary plate 33 which is mounted on one end of the in-barrel rotary member 3 is supported by the bearing 11 on the base 1, thereby allowing the in-barrel rotary member 3 to be rotated in the cylindrical fixed barrel 2, while a crank pin 44 which forms part of the rotation drive mechanism 4 is disposed on the outer periphery of the rotary plate 33 which is mounted on the other end of the in-barrel rotary member 3 so that the rotation drive mechanism 4 for rotating the in-barrel rotary member 3 allows a drive force of the fluid pressure cylinder 41 shown in Fig. 1 to be transmitted to the crank pin 44 via a connection rod 43 which is rotatably connected thereto.

The configuration of the rotation drive mechanism 4 for rotating the in-barrel rotary member 3 will be further described in detail with reference to Fig. 1. The rotation drive mechanism 4 described herein uses the fluid pressure cylinder 41 which is driven by oil-hydraulic or pneumatic drive source. The distal end of a piston rod 42 which is linearly driven by the fluid pressure cylinder 41 is connected to the proximal end of the connection rod 43 and the distal end of the connection rod 43 is rotatably connected to the crank pin 44 on the rotary plate 33 such that those form a crank mechanism that rotates the in-barrel rotary member 3 via the rotary plate 33.

The fluid pressure cylinder 41 is driven by means of fluid pressure supplied from a common fluid pressure generator 7 as well as pressure mechanisms 54A, 54B of conveyers 51, 52 in the rubber bale supplying mechanisms 5A, 5B as a drive force. Specific configuration of a drive system of the fluid pressure generator 7 will be described later along with a drive system of pressure mechanism 54A, 54B.

The fluid pressure cylinder 41 of the rotation drive mechanism 4 is supported by a frame 10 on the base 1, and as described above, the distal end of the piston rod 42 of the fluid pressure cylinder 41 is connected to the crank pin 44 of the rotary plate 33 via the crank mechanism. The crank mechanism is connected to the crank pin 44 of the in-barrel rotary member 3 to transmit rotation with the dead points provided when the pair of rotary blades 32 are located at positions upper and lower sides of the in-barrel rotary member 3, that is, at rotational positions which do not contribute to cutting of the rubber bale 9.

In such a configuration of the rotation drive mechanism 4 of the in-barrel rotary member 3, the maximum rotation force of the crank mechanism between the top and bottom dead points can be used for cutting of the rubber bale 9 at the barrel side supply ports 21A, 21B for the rubber bale 9 formed on the a pair of opposed barrel walls of the cylindrical fixed barrel 2, and cutting of the rubber bale 9 is not performed when the connection rod 43, the crank pin 44 and the piston rod 42 of the fluid pressure cylinder 41 are positioned in line and no component force is generated to rotate the crank pin 44. Accordingly, properties of the crank mechanism can be effectively used.

When a configuration is employed in which a weight is given to one or both of the rotary plates 33 of the in-barrel rotary member 3 to provide a flywheel effect or a separate flywheel is disposed, the in-barrel rotary member 3 or the rotation drive mechanism 4 may have a flywheel effect, thereby eliminating a problem of variation in rotational drive force depending on a rotational position of the crank pin 44. Accordingly, a drive source of the rotation drive mechanism 4 may be advantageously the above described fluid pressure cylinder 41, but is not limited thereto, and any other drive source can also be used.

The rubber bale supplying mechanisms 5A, 5B for supplying the rubber bale 9 to be cut toward inside of the inner side of the barrel side supply ports 21A, 21B are disposed on the outer side of the pair of barrel side supply ports 21A, 21B of the cylindrical fixed barrel 2. The rubber bale supplying mechanisms 5A, 5B are formed of a pair of conveyers 51, 52 that supply the rubber bale 9 toward the barrel side supply ports 21A, 21B while holding the rubber bale 9 to be supplied between the pair of conveyers 51, 52 with pressure applied from the upper and lower sides. Fig. 1 shows a supplying state of a thick rubber bale 9, while Fig. 2 shows a supplying state of a thin rubber bale 9 by the same rubber bale supplying mechanisms 5A, 5B as that of Fig. 1.

In the pair of upper and lower conveyers 51, 52 of the rubber bale supplying mechanisms 5A, 5B, the lower conveyer 51 is provided as a driving conveyer that drives an endless belt 51a in a supply direction by a drive mechanism 51d of rolls 51b with the rubber bale 9 placed on the endless belt 51a which is wound around between the rolls 51b on the support table 51c, while the upper conveyer 52 is provided as a driven conveyer having a plurality of rollers 52a which move along with the movement of the rubber bale 9 rotatably arranged in a roller support frame 52b.

Further, the pair of upper and lower conveyers 51, 52 is provided with pressure mechanisms 54A, 54B on one of the upper and lower conveyers 51, 52 so that the pressure mechanisms 54A, 54B push the conveyer toward the other of the conveyers to hold the rubber bale 9 therebetween while applying pressure from the upper and lower sides. More specifically, in the rubber bale supplying mechanism 5A, the roller support frame 52b of the upper conveyer 52 is connected to and hung from the distal ends of the piston rods 56a of a plurality of pressure cylinders 55a supported by the frame 10 on the base 1. On the other hand, in the rubber bale supplying mechanism 5B, the support table 51c of the lower conveyer 51 is connected to the distal ends of the piston rods 56b of a plurality of pressure cylinders 55b supported by the base 1. Accordingly, the rubber bale 9 is held between the pair of upper and lower conveyers 51, 52 by means of fluid pressure from the fluid pressure generator 7 that supplies and discharges pressure to and from the pressure cylinders 55a, 55b.

For driving those pressure mechanisms 54A, 54B, the fluid pressure supplied by the pump 70 from the common fluid pressure generator 7 which is shared by the fluid pressure cylinder 41 and the like of the rotation drive mechanism 4 that rotates the in-barrel rotary member 3 is used as a drive force. The fluid pressure is supplied from the pump 70 to the fluid pressure cylinder 41 of the rotation drive mechanism 4 of the in-barrel rotary member 3 and the pressure cylinders 55a, 55b of the pressure mechanisms 54A, 54B of the rubber bale supplying mechanisms 5A, 5B via supply pipes 71, 72, respectively. Circulation pipes 73, 74 are configured to circulate the pressure fluid to the fluid pressure generator 7 after actuating the cylinders.

The supply pipes 71, 72 and the circulation pipes 73, 74 are provided with a supply switching valve 76 that allows the pressure fluid to be supplied to the necessary cylinder at a necessary timing and a circulation switching valve 77 that allows the pressure fluid to be circulated when the pressure fluid is not necessary in those cylinders, and opening and closing of those valves are controlled by a controller in conjunction with a series of operations of the entire apparatus. Further, as a matter of course, if it is necessary to adjust the fluid pressure to be supplied to each of the cylinders, a pressure adjustment valve, which is not shown in the figure, is provided in the supply pipes so as to control the fluid pressure.

Although the pair of upper and lower conveyers 51, 52 that form the rubber bale supplying mechanisms 5A, 5B are provided for supplying the rubber bale 9 toward the barrel side supply ports 21A, 21B in the state that the rubber bale 9 is pressurized and held between the conveyers 51, 52 as described above, the rubber bale supplying mechanisms 5A, 5B may also accommodate cutting of the rubber bales 9 having different thickness as shown in Figs. 1 and 2. In this case, one of the upper and lower conveyers 51, 52 of the rubber bale supplying mechanisms 5A, 5B which are provided with the pressure mechanisms 54A, 54B may be moved toward the other of the conveyers by the pressure mechanisms 54A, 54B so as to pressurize and hold the rubber bale 9 having different thickness between the conveyers 51, 52.

As described above, when the rubber bale 9 to be supplied is cut while being pressurized and held from the upper and lower sides, the rubber bale 9 can be held and cut in a stable manner regardless of the thickness, and in addition to that, the horizontal position of the rubber bale 9 and adjacent positioning of the surface of the rubber bale 9 to the blade edge 25a of the receiving blade 25 in a cutting end position can be maintained. As a result, it is possible to prevent the rubber bale 9 from being inclined or dragged due to the rotary blade 32 that pressurizes the rubber bale 9 during cutting, and maintain the thickness of the rubber cut pieces to be shaved off in a substantially regular thickness. Furthermore, when one of the pair of upper and lower conveyers 51, 52 moves the rubber bale 9 in the supply direction and the other of the conveyers is a driven conveyer that is movable along with the movement of the rubber bale 9, it is possible to stabilize the movement state of movement position of the rubber bale 9 and cut the rubber bale 9 in a predetermined thickness in a stable manner.

Further, cutting of a pair of rubber bales 9 supplied by the rubber bale supplying mechanisms 5A, 5B finally ends at a position between the rotary blade 32 of the in-barrel rotary member 3 and the receiving blade 25 of the cylindrical fixed barrel 2. Accordingly, the pair of upper and lower conveyers 51, 52 of the rubber bale supplying mechanisms 5A, 5B need to be disposed to bring the cutting end area of the rubber bale 9 at a blade edge position of the receiving blade 25, that is, at a position in which the rotary blade 32 and the receiving blade 25 mesh each other.

Accordingly, when the rubber bale supplying mechanisms 5A, 5B accommodate cutting of the rubber bale 9 having different thickness as shown in Fig. 2, the conveyer of the pair of upper and lower conveyer 51, 52 of the rubber bale supplying mechanisms 5A, 5B which is positioned adjacent to the pair of receiving blade 25 of the cylindrical fixed barrel 2, that is, the lower conveyer 51 of the rubber bale supplying mechanism 5A and the upper conveyer 52 of the rubber bale supplying mechanism 5B are fixed to a position adjacent to the blade edge 25a of the receiving blade 25, while the conveyers which oppose those conveyers, that is, the upper conveyer 52 of the rubber bale supplying mechanism 5A and the lower conveyer 51 of the rubber bale supplying mechanism 5B are configured to move toward the opposed conveyers by means of the pressure mechanisms 54A, 54B in order to bring the cutting end area of the rubber bale 9 to a position in which the rotary blade 32 and the receiving blade 25 mesh each other as similar to the case of Fig. 1.

As shown in Fig. 1, when the thick rubber bale 9 is cut, a feeding end of the rubber bale 9 is held at a position adjacent to the barrel side supply ports 21A, 21B of the cylindrical fixed barrel 2 by the conveyers 52, 51 which are provided with the pressure mechanisms 54A, 54B. On the other hand, as shown in Fig. 2, when the thin rubber bale 9 is cut or held between the pair of opposed conveyers, the rubber bale 9 is pressed by the pressure mechanisms 54A, 54B toward the opposed conveyers. Accordingly, in order to hold the feeding end of the rubber bale 9 on the pressing conveyers 52, 51 at a position adjacent to the barrel side supply ports 21A, 21B of the cylindrical fixed barrel 2, the conveyers 52, 51 need to be withdrawn in a direction opposite to the supply direction of the rubber bale 9 along the barrel side supply ports 21A, 21B while the conveyers 52, 51 are brought closer toward the opposed conveyers by the pressure mechanism 54A, 54B.

While the upper conveyer 52 of the rubber bale supplying mechanism 5A and the lower conveyer 51 of the rubber bale supplying mechanism 5B are configured to be pressed toward the opposed conveyers by the pressure mechanisms 54A, 54B as described above, slide mechanisms 57A, 57B are provided to withdraw the conveyers which are pressed by the pressure mechanisms 54A, 54B along with the pressure mechanisms 54A, 54B, at the same time of being pressed, in the direction opposite to the supply direction of the rubber bale 9 by the rubber bale supplying mechanisms 5A, 5B.

More specifically, the slide mechanism 57A is configured to move a plurality of pressure cylinders 55a which form the pressure mechanism 54A of the rubber bale supplying mechanism 5A and the conveyer 52 which are connected to and hung from the piston rods 56a for withdrawal as described above. The proximal ends of the plurality of pressure cylinders 55a are fixed to a slide table 58a and the slide table 58a is slidably supported by the frame 10 such that the slide table 58a performs withdrawal and return from the withdrawal position by a slide drive device 58b on the frame 10.

On the other hand, the slide mechanism 57B is configured to move a plurality of pressure cylinders 55b which form the pressure mechanism 54B of the rubber bale supplying mechanism 5B and the conveyer 51 which are connected to the piston rod 56b for withdrawal as described above. The upper ends of the plurality of pressure cylinders 55b are fixed to a slide table 59a and the slide table 59a is slidably supported by the frame 10 such that the slide table 59a performs withdrawal and return from the withdrawal position by a slide drive device 59b on the frame 10.

The conveyer 52 of the rubber bale supplying mechanism 5A and the conveyer 51 of the rubber bale supplying mechanism 5B by the slide mechanisms 57A, 57B can be controlled by a control circuit, which is not shown in the figure, to move forward and backward by a necessary distance in conjunction with the upward and downward movement of the conveyers by the pressure mechanisms 54A, 54B. Moreover, when a distance of movement of the conveyers 52, 51 is insignificant and successful cutting of the rubber bale 9 can be performed without that movement, the slide mechanisms 57A, 57B may not be provided, or alternatively, the slide mechanisms 57A, 57B may be replaced with more simplified means.

The rubber bale, which is an object to be cut in the present invention, is generally loaded on a pallet and handled (transported/stored) in a unit of pallet. Accordingly, the uppermost and lowermost rubber bales loaded on the pallet have a significant difference in their load, and, during baling of the rubber fed out from a dryer in a rubber manufacturing line, the rubber bales become bulky when loaded on a pallet since they contain air during forming. However, upper rubber bales and lower rubber bales in a stack on the pallet have difference in density. It has been found that the rubber bale with an international standard size of 350 mm thickness may have a difference in thickness in the range of 10 to 50 mm. Further, the rubber bale thickness varies not only between each of the rubber bales, but also within one rubber bale which has partially different thickness. Accordingly, it is necessary for the pair of upper and lower conveyers 51, 52 that supply the rubber bale 9 toward the barrel side supply ports 21A, 21B while pressurizing and holding the rubber bale 9 from the upper and lower sides to hold the uncut portion of the rubber bale 9 in a stable manner regardless of progress of cutting of the rubber bale 9 by the rotary blade 32.

That is, in the course of cutting of the rubber bale 9, if the pair of upper and lower conveyers 51, 52 fail to hold the rubber bale 9 in a stable manner, a large amount of force acts on the rubber bale 9 to drag it into the in-barrel rotary member 3 during cutting by the rotary blade 32. As a result, the uncut portion of the rubber bale 9 may be dragged into the in-barrel rotary member 3 or its position may be significantly disturbed, and it becomes difficult to successively continue appropriate cutting of the rubber bale.

Particularly, as cutting of one rubber bale approaches to an end, an area of the rubber bale 9 held by the pair of upper and lower conveyers 51, 52 decreases, and accordingly, deformation of the surface of the rubber bale 9 becomes large. As a result, holding of the rubber bale 9 by the pair of upper and lower conveyers 51, 52 becomes unstable, and the uncut portion may be highly likely to be dragged into the in-barrel rotary member 3.

In order to hold the uncut portion of the rubber bale 9 by the pair of conveyers 51, 52 in more stable manner, it is desirable to provide the rubber bale supplying mechanisms 5A, 5B which are formed of the conveyers 51, 52 having the pressure mechanisms 54A, 54B with greater rigidity, or to provide the conveyers 51, 52 per se with a flexible configuration that corresponds to deformation of the rubber bale 9. Specifically, the conveyers 51, 52 may have the surface that follows the deformation of the rubber bale 9, or a plurality of elastically extending projections may be formed on the surface of the conveyers 51, 52 so as to be penetrated into deformed surface of the rubber bale 9.

When cutting of one rubber bale approaches to an end and holding of the rubber bale 9 by the pair of upper and lower conveyers 51, 52 becomes difficult, the rubber bale supplying mechanisms 5A, 5B need to hold the feeding end of the rubber bale 9 on the conveyers 51, 52 at a position adjacent to the barrel side supply ports 21A, 21B of the cylindrical fixed barrel 2 as possible in order to prevent the uncut portion of the rubber bale 9 from being dragged into the in-barrel rotary member 3. In addition to that, for example, a plurality of penetrating projections may be provided on the periphery of the roll 51b around which the endless belt 51a which forms the driving conveyer is wound or any alternative pulley on the feeding end of the rubber bale 9 on the conveyers 51, 52 so that the projections extend to the outside through a plurality of through holes on the endless belt 51a which is in the form of flexible wire net and the penetrating projections forcibly feed the rubber bale into the barrel side supply ports 21A, 21B of the cylindrical fixed barrel 2 while holding the rubber bale through the endless belt 51a.

Further, as a simple means for more securely holding the rubber bale when cutting of one rubber bale approaches to an end, it is advantageous to provide a pressing mechanism that elastically presses the feeding end of the rubber bale 9 on the pair of upper and lower conveyers 51, 52 against the rubber bale 9. In this case, the conveyers may be generally inclined about the pivotal point of the other end of each of the pair of conveyers 51, 52, or alternatively, only a portion of the rubber bale 9 from an intermediate position of the conveyers 51, 52 to the feeding end of the rubber bale 9 may be inclined by an elastically pressing force. The pressing mechanism may be used only for holding the rubber bale 9 when cutting of one rubber bale approaches to an end, but may also be applied to constantly stabilize holding of the rubber bale 9 during cutting of the rubber bale 9.

Furthermore, in addition to the rubber bale supplying mechanisms 5A, 5B, a holding mechanism may be provided on the outside of the barrel side supply ports 21A, 21B of the cylindrical fixed barrel 2 so as to operate in conjunction with the intermittent movement of the conveyers 51, 52, which will be described later, and temporarily hold the uncut portion of the rubber bale. The configuration and operation of the holding mechanism will be described later in connection with the intermittent movement of the conveyers.

In cutting of the rubber bale 9 by the above mentioned rubber bale cutting device, the rubber bale 9 is supplied by the rubber bale supplying mechanisms 5A, 5B into the in-barrel rotary member 3 from the barrel side supply ports 21A, 21B of the cylindrical fixed barrel 2 while the in-barrel rotary member 3 rotates to cut the rubber bale 9 by the rotary blade 32. When supply of the rubber bale 9 by the rubber bale supplying mechanisms 5A, 5B and movement of the rotary blade 32 by rotation of the in-barrel rotary member 3 are successively performed at a constant speed, movement of the rubber bale 9 continues during cutting of the rubber bale 9 by the rotary blade 32, and accordingly, the rubber bale 9 moves beyond the rotation locus of the blade edge 32a even immediately after the rubber bale 9 is partially cut by the blade edge 32a of the rotary blade 32 by driving of the rubber bale supplying mechanisms 5A, 5B. As a result, the frame body 31 for mounting the rotary blade 32 can not be provided near the rotation locus of the blade edge 32a as shown in the illustrated in-barrel rotary member 3, and the frame body 31 needs to be sufficiently withdrawn from the rotation locus of the blade edge 32a or to be provided not to bother movement of the rubber bale 9. Such a problem does not occur if cutting speed of the rotary blade 32 by rotation of the in-barrel rotary member 3 is sufficiently large relative to supply speed of the rubber bale 9 by the rubber bale supplying mechanisms 5A, 5B.

However, even if the frame body 31 of the in-barrel rotary member 3 is configured to address the problem, a period of time from the time when the rotary blade 32 finishes cutting of one rubber bale 9 to the time when the rotary blade 32 reaches a cutting position of the next rubber bale 9 is different between the case in which the rubber bale 9 per se is thick as shown in Fig. 1 and the case in which the rubber bale 9 per se is thin as shown in Fig. 2. Accordingly, the thickness of the rubber cut piece 9a of the thick rubber bale 9 shown in Fig. 1 differs from the thickness of the rubber cut piece 9a of the thin rubber bale 9 shown in Fig. 2. As a result, the thickness of the rubber cut piece 9a is adjusted by means of driving speed of the rubber bale supplying mechanisms 5A, 5B and rotation speed of the rotary blade 32 depending on the thickness of the rubber bale 9 to be cut.

Although the frame body 31 of the above mentioned in-barrel rotary member 3 allows for cutting of the rubber bale 9 while successively supplying the rubber bale 9 and moving the rotary blade 32 by the in-barrel rotary member 3 at a constant speed, it is desirable to provide the drive mechanism 51d of the conveyers 51, 52 which form the rubber bale supplying mechanisms 5A, 5B as a device that controls intermittent feeding of a predetermined length, preferably a servo motor that performs pitch feeding so that, when the barrel side supply ports 21A, 21B for the rubber bale 9 of the cylindrical fixed barrel 2 overlap the inner supply ports 35 of the in-barrel rotary member 3 and becomes a state in which the rubber bale 9 can be supplied into the in-barrel rotary member 3, a control mechanism controls the rubber bale 9 of a predetermined length to be supplied into the in-barrel rotary member 3 by the drive mechanism 51d of the conveyers 51, 52 with the rotation of the in-barrel rotary member 3 being temporarily stopped, and after that, when the supplied rubber bale 9 is cut, the control mechanism controls supply of the rubber bale 9 to be stopped by rotating the in-barrel rotary member 3 with the drive mechanism 51d of the conveyers 51, 52 being stopped, thereby performing desired cutting of the rubber bale 9 in a stable manner.

As described above, when the thickness of rubber bales 9 to be cut are different, the thickness of the rubber cut pieces 9a to be cut are different. Generally, when the drive mechanism 51d of the rubber bale supplying mechanisms 5A, 5B and the rotation drive mechanism 4 of the in-barrel rotary member 3 are intermittently driven, the thickness of the rubber cut pieces 9a to be cut is adjusted by adjusting speed and period of driving the rubber bale supplying mechanisms 5A, 5B to adjust the supply amount of the rubber bale 9 and the subsequent rotation speed of the rotary blade 32 as appropriate.

Further, when the rubber bale supplying mechanisms 5A, 5B and the in-barrel rotary member 3 are sequentially operated, one or both of the drive speed of the drive mechanism 51d of the conveyers 51, 52 that form the rubber bale supplying mechanisms 5A, 5B and the rotation speed of the rotation drive mechanism 4 that rotates the in-barrel rotary member 3 which is provided with the rotary blade 32.

With such adjustment, the thickness and cutting speed of the rubber cut pieces 9a to be cut can be adjusted as appropriate.

As the holding mechanism that operates in conjunction with the intermittent movement of the conveyer 51, 52, for example, holding members may be provided at positions upper and lower sides on the outer surface of the barrel side supply ports 21A, 21B of the cylindrical fixed barrel 2 so that the holding members temporarily hold the rubber bale 9, which is fed from the barrel side supply ports 21A, 21B to the cutting position in the cylindrical fixed barrel 2, at a position immediately before the cutting position by means of pressure from the fluid pressure cylinder or the like. The holding mechanism is configured to temporarily stop rotation of the in-barrel rotary member 3 when the barrel side supply ports 21A, 21B for the rubber bale 9 of the cylindrical fixed barrel 2 overlap the inner supply ports 35 of the in-barrel rotary member 3, hold the rubber bale 9 when the conveyers 51, 52 are stopped after the rubber bale 9 of a predetermined length is supplied into the in-barrel rotary member 3 by the drive mechanism 51d of the conveyer 51, 52, perform cutting of the supplied rubber bale 9 by rotating the in-barrel rotary member 3, and allow the holding member to be returned to the withdrawal position when the rubber bale is supplied after the cutting.

In the above described rubber bale cutting device, a measuring feeder 6 for measuring a weight of the rubber cut pieces 9a and ejecting them from the ejection port 22 is disposed immediately under the ejection port 22 for the rubber cut pieces 9a formed on the lower part of the cylindrical fixed barrel 2 which is mounted on the base 1. The measuring feeder 6 is configured to sequentially measure the weight of the rubber cut pieces 9a and feed them by drive of the conveyer 61 by means of the drive mechanism 62, or alternatively, measure them in a batch and feed them out. With this configuration, based on the measured weight of the rubber cut pieces 9a, the controller may control the cutting device to cut the remaining weight necessary for obtaining a desired compound amount of the rubber cut pieces 9a by automatic or manual adjustment of the thickness of the rubber cut pieces 9a.

For example, the speed of the conveyers 51, 52 of the rubber bale supplying mechanisms 5A, 5B may be decreased before the cut amount of the rubber bale becomes a predetermined weight so as to decrease the thickness of the rubber cut piece 9a to be cut and thus the weight of one piece, thereby significantly improving the measurement precision. Accordingly, it is desirable, in control of the measuring feeder, that the controller is set in advance with a predetermined value of the cutting weight and a weight before predetermined weight within the range of 80 to 95% of the predetermined weight so as to operate the conveyer of the rubber bale supplying mechanism at a speed which allows cutting the rubber cut pieces 9a in a size that can be smoothly ejected from the ejection port 22 until the weight before predetermined weight is reached, and when it receives from the controller that the weight before predetermined weight is reached, to decrease a speed of the conveyer to a lowest speed and decrease the weight of the rubber cut pieces to a minimum weight, and then, when the predetermined weight is reached, stop the cutting operation and transport the predetermined weight of rubber on the measuring feeder 6 to the next stage. A configuration of the measuring feeder 6 per se can be achieved by a technique which has been practically used.

As described above, a configuration in which the cylindrical fixed barrel 2 which has the horizontally positioned axis includes the barrel side supply ports 21A, 21B for the rubber bale 9 to be cut disposed on a pair of opposed barrel wall, and the ejection port 22 for the rubber cut pieces 9a is formed on the lower part of the barrel is advantageous for the measuring feeder 6 that measures the weight of the rubber cut pieces 9a to be positioned immediately under the ejection port 22. Accordingly, this facilitates successive cutting of the polymer material and connection to the measuring feeder 6 that automatically measures the rubber cut pieces 9a, and achieves energy saving and high productivity.

Then, with reference to Figs. 1 and 5 to 7, an embodiment of cutting of the rubber bale 9 by the rubber bale cutting device having the above configuration will be described.

In the following description, as shown in Fig. 5, a position right above the common center axis shared by the cylindrical fixed barrel 2 and the in-barrel rotary member 3 is defined as a reference position of 0 degree, and a position around the cylindrical fixed barrel 2 is defined by a counterclockwise rotational angle from the reference position. However, as the barrel side supply ports 21A, 21B of the cylindrical fixed barrel 2, a certain range of rotational angle is defined a rotational angle of substantially the center of the range.

As shown in Fig. 1, in the rubber bale cutting device which includes the in-barrel rotary member 3 which is in internal contact with the cylindrical fixed barrel 2 and rotates by the rotation drive mechanism 4, cutting of the rubber bale 9 is schematically performed by supplying the rubber bale 9 from the pair of barrel side supply ports 21A, 21B on the cylindrical fixed barrel 2 by the rubber bale supplying mechanisms 5A, 5B, rotating the in-barrel rotary member 3 in the cylindrical fixed barrel 2 by the rotation drive mechanism 4, cutting the rubber bale 9 supplied from the opposed barrel side supply ports 21A, 21B of the cylindrical fixed barrel 2 by the rotary blade 32 of the in-barrel rotary member 3 while the in-barrel rotary member 3 makes a half turn, and sequentially ejecting the rubber cut pieces 9a from the ejection port 22 of the cylindrical fixed barrel 2, and a pair of rubber bale 9 is efficiently cut by repeating the above processes.

It is desirable to perform cutting of the rubber bale 9 by supplying the rubber bale 9 of a predetermined length into the in-barrel rotary member 3 when the barrel side supply ports 21A, 21B for the rubber bale 9 of the cylindrical fixed barrel 2 overlap the inner supply ports 35 of the in-barrel rotary member 3 by intermittent driving of the conveyers 51, 52 which form the rubber bale supplying mechanisms 5A, 5B and becomes a state in which the rubber bale 9 can be supplied into the in-barrel rotary member 3 as shown in Fig. 5, and then cutting the rubber bale 9 by the rotary blade 32 of the in-barrel rotary member 3 while the supply of the rubber bale 9 is stopped, and after the cutting, supplying the rubber bale 9 again while rotation of the in-barrel rotary member 3 is stopped, and repeating the above intermittent driving. However, as described above, cutting of the rubber bale 9 can also be performed by successively driving the conveyers 51, 52 which form the rubber bale supplying mechanisms 5A, 5B and the rotary blade 32 of the in-barrel rotary member 3.

With reference to Figs. 5 to 7, an embodiment of cutting of the rubber bale 9 by intermittently driving or successively driving the rubber bale supplying mechanisms 5A, 5B and the in-barrel rotary member 3 will be described. Fig. 5 shows start of cutting by the rotary blade 32 at the leading end portion of the rubber bale 9 supplied into the cylindrical fixed barrel 2 by the rubber bale supplying mechanisms 5A, 5B, Fig. 6 shows a state during the cutting in which a pair of rotary blades 32 have been moved to positions of 90 degrees and 270 degrees, and Fig. 7 shows end of the cutting. The states shown in Figs. 5 to 7 apply to transport of the rubber bale 9 by the conveyers 51, 52 and cutting of the rubber bale 9 by the rotary blade 32 of the in-barrel rotary member 3 performed by either of cc or successive driving.

First, Fig. 5 shows a state of the start of cutting in which the blade edge 32a of the rotary blade 32 cuts into the leading end portion of the rubber bale 9 supplied into the cylindrical fixed barrel 2 by the rubber bale supplying mechanisms 5A, 5B. In the case of intermittent driving, the in-barrel rotary member 3 has been stopped at the position shown in the figure, and the rubber bale 9 has been brought to the position shown in the figure by the pair of upper and lower conveyers 51, 52 of the rubber bale supplying mechanisms 5A, 5B holding the rubber bale 9 from the upper and lower sides and has been supplied to the barrel side supply ports 21A, 21B. On the other hand, in the case of subsequent driving, the rubber bale 9 and the rotary blade 32 have been simultaneously brought to the position shown in the figure by successive driving of the rubber bale supplying mechanisms 5A, 5B and by successive driving of the rotary blade 32 by the in-barrel rotary member 3.

When the rotary blade 32 starts its operation from the state of Fig. 5 by rotation of the in-barrel rotary member 3 by the rotation drive mechanism 4, the blade edge 32a of the rotary blade 32 cuts into the leading end portion of each of the pair of rubber bales 9 which have been supplied by the rubber bale supplying mechanisms 5A, 5B, and cutting of the rubber bale 9 starts. In this case, as shown in Fig. 6, the rotary blade 32 shaves off the leading end portion of the rubber bale 9 while moving in the cylindrical fixed barrel 2 along the inner surface of the barrel side supply ports 21A, 21B.

More specifically, in a cutting structure in which the rotary blade 32 moves along the inner cylindrical surface of the cylindrical fixed barrel 2, the rubber cut pieces 9a is cut off by the rotary blade 32 in an arc shape, as shown in Figs. 6 and 7, as if it is shaved off by a plane. Further, a cutting position in which the blade edge 32a first cuts in is not brought into press contact with the backside of the rotary blade 32, and the shaved rubber piece is removed while being peeling off. Accordingly, unlike the conventional guillotine type cutter, the cutting blade is not affected by a significant friction resistance caused by adhesiveness between the rubber layer and the surface of the cutting blade when the cutting blade cuts into the rubber layer, and the adhesive friction resistance generated when the rotary blade 32 cuts into the rubber bale 9 is largely reduced.

When cutting of the rubber bale 9 by the rotary blade 32 further progresses from the state shown in Fig. 6 and the rotary blade 32 meshes the receiving blade 25 as shown in Fig. 7, the rubber cut pieces 9a are cut off and fall into the ejection port 22. In particular, in the state shown in Fig. 7, the rubber bales 9 are almost simultaneously cut off at the positions of the receiving blades 25 on the upper and lower ends of the pair of barrel side supply ports 21A, 21B. At this time, the rubber bales 9 are each cut off at the inside of the barrel side supply ports 21A, 21B, that is, at the positions of 90 degrees and 270 degrees on the cylindrical fixed barrel 2 into a vertically elongated shape. Accordingly, the rubber bales 9 which are almost simultaneously cut off are less likely to interrupt each other, and smoothly fell through the ejection port 22.

In the in-barrel rotary member 3, two rotary blades 32 are disposed at two opposed positions which are offset by 180 degrees. When two rotary blades 32 make a one turn in the cylindrical fixed barrel 2 by rotation of the in-barrel rotary member 3 by means of the rotation drive mechanism 4, each of the rotary blades 32 cut each of the rubber bales 9 which are supplied from the both sides of the cylindrical fixed barrel 2. That is, while the conventional guillotine type cutter is configured to perform one cutting operation when the blade reciprocates one time, the above mentioned two rotary blades 32 are configured to each perform two cutting operations of the rubber bales 9 when the in-barrel rotary member 3 makes one turn, which results in four rubber cut pieces 9a being cut off.

In the above example of the rubber bale cutting device shown in Figs. 1 to 4, the rubber bales 9 are supplied from the pair of barrel side supply ports 21A, 21B formed on the opposed side faces of the cylindrical fixed barrel 2 through the pair of inner supply ports 35 of the in-barrel rotary member 3 which rotates while being in internal contact with the cylindrical fixed barrel 2 so that a pair of rubber bales 9 are simultaneously cut off. However, the present invention is not limited to such a configuration, and as described below, one barrel side supply port or two or more barrel side supply ports may be provided on the cylindrical fixed barrel 2, or alternatively, one inner supply port 35 or two or more inner supply ports 35 may be provided on the in-barrel rotary member 3.

First, one or a plurality of barrel side supply ports may be disposed on the cylindrical fixed barrel 2. When a single barrel side supply port is provided, for example, only one of the barrel side supply ports on the side faces of the barrel wall shown in Fig. 1 may be provided, and the other of the barrel side supply ports may be closed. In this state, as a matter of course, there is no need of providing the rubber bale supplying mechanism for supplying the rubber bale 9 to the other of the barrel side supply ports, and accordingly, the cutting device can be significantly simplified and the device having high productivity with a small drive power can be provided. Further, although the inner supply ports 35 of the in-barrel rotary member 3 may be a single inner supply port 35, corresponding to the number of barrel side supply port on the cylindrical fixed barrel 2, a pair of inner supply ports 35 or more may be provided as will be described later with reference to Fig. 8.

While a pair of barrel side supply ports of the cylindrical fixed barrel 2 can be formed on one cylindrical fixed barrel 2 as shown in Figs. 1 to 4, a larger number of barrel side supply ports may be provided on one cylindrical fixed barrel 2 by increasing the diameter of the cylindrical fixed barrel 2. For example, the barrel side supply ports may be provided not only on the side faces of the cylindrical fixed barrel 2, but also on the upper side of the cylindrical fixed barrel 2, and further, a plurality of stages of the barrel side supply ports may be provided on the side faces of the cylindrical fixed barrel 2. In such cases, the rubber bale supplying mechanism and the like for supplying the rubber bales 9 to each of the barrel side supply ports need to be provided as similar to those shown in Figs. 1 and 2.

When one or a plurality of barrel side supply ports are provided on one cylindrical fixed barrel 2, although the number of inner supply ports 35 provided on the in-barrel rotary member 3 may correspond to the number of the barrel side supply ports as shown in the above example, it may not necessarily correspond to the number of the barrel side supply ports, and any number of inner supply ports 35 may be provided on one in-barrel rotary member 3. However, since the inner supply port 35 needs to be sized to receive the rubber bale 9 and to allow the rubber cut pieces 9a to be ejected through the ejection port 22 and the rotary blade 32 needs to be mounted on the rim of the inner supply port 35, the maximum number of the inner supply ports 35 which can be provided on the in-barrel rotary member 3 is limited due to the relationship between the perimeter of the in-barrel rotary member 3 and the opening width of the inner supply port 35 in the circumferential direction.

Fig. 8 shows is a view which shows that three inner supply ports 35 are provided with an equal interval around the in-barrel rotary member 3, and the configuration is assumed to be used for the rubber bale cutting device as shown in Figs. 1 and 2, but is not limited thereto.

The in-barrel rotary member 3, as similar to that described with reference to Figs. 3 and 4, includes the frame body 31 in the cylindrical fixed barrel 2 on which the barrel side supply ports 21A, 21B are formed such that the frame body 31 is supported to be rotatable about the same center axis as that of the cylindrical fixed barrel 2, and the three inner supply ports 35 are provided on the frame body 31 with the rotary blade 32 for cutting the rubber bale 9 being mounted on the rim of each of the inner supply ports 35. Further, the receiving blades 25 are disposed on the rim of each of the barrel side supply ports 21A, 21B of the cylindrical fixed barrel 2 so as to oppose the rotary blades 32.

Although these inner supply ports 35 are brought to oppose each of the pair of barrel side supply ports 21A, 21B as the in-barrel rotary member 3 makes a half turn in the cylindrical fixed barrel 2, the inner supply ports 35 do not simultaneously come to positions that oppose the barrel side supply ports 21A, 21B, and accordingly, the rubber bale supplying mechanisms provided on the barrel side supply ports 21A, 21B are driven to feed a necessary amount of the rubber bale 9 when the barrel side supply ports of the cylindrical fixed barrel 2 communicate with any of the inner supply ports 35 of the in-barrel rotary member 3 so that the rubber bale 9 can be received in the in-barrel rotary member 3. Cutting of the rubber bale 9 by each of the rotary blades 32 is performed in the same manner as described with reference to Figs. 5 to 7. Further, as shown in Fig. 4, the rotary blades 32 can obtain a significant energy saving effect by providing the entire blade edge 32a to be inclined to the receiving blade 25.

When the rotary blades 32 are provided for each of the three equally spaced inner supply ports 35 as shown in Fig. 8, there is a possibility that ejection of the rubber cut pieces 9a cut by the rotary blade 32 at the barrel side supply port 21A or 21B is disturbed from being ejected through the ejection port 22 by an object located on or adjacent to the ejection port 22 such as the frame body 31 of the in-barrel rotary member 3 that supports another rotary blade 32. However, ejection of the rubber cut pieces 9a through the ejection port 22 is not disturbed when the receiving blade 26 is disposed on the rim that opposes the rotary blade 32 of the ejection port 22, as shown in Fig. 8, so as to cut the rubber cut pieces 9a located at the ejection port 22. Furthermore, the receiving blade 26 may be provided not only in the case where the cylindrical fixed barrel 2 and the in-barrel rotary member 3 are provided as shown in Fig. 8, but also in other example.

Although three equally spaced inner supply ports 35 are provided on the periphery of the in-barrel rotary member 3 in Fig. 8, four equally spaced inner supply ports may be provided on the periphery of the in-barrel rotary member 3 in the same manner as described above. In this case, when the in-barrel rotary member is applied to a rubber bale cutting device which includes a pair of barrel side supply ports 21A, 21B as shown in Figs. 1 and 2, the inner supply ports 35 are simultaneously brought to the positions that oppose the barrel side supply ports 21A, 21B, and accordingly, the rubber bale supplying mechanisms provided on the barrel side supply ports 21A, 21B may be driven in the same manner as those of the example described with reference to Figs. 1 and 2.

In the above cutting method and device, the inner supply ports 35 for receiving the rubber bale 9 are formed on the in-barrel rotary member 3 which rotates while being in internal contact with the cylindrical fixed barrel 2 on which the barrel side supply ports 21A, 21B for the rubber bale 9 are formed, and the rotary blades 32 are mounted on the rim of the inner supply ports 35 of the in-barrel rotary member so that the rubber bales 9 supplied from the outside of the barrel side supply ports 21A, 21B of the cylindrical fixed barrel are cut by the rotary blade 32 as if being shaved by a plane. Accordingly, an adhesive friction resistance generated when the rotary blade 32 cuts into the rubber bale is significantly reduced, and as a result, high speed cutting of the rubber bale 9 can be performed with a smaller drive force of the in-barrel rotary member 3, and in addition to that, the rubber cut pieces 9a having high weight precision can be successively supplied to the measuring mechanism with high speed. Since the whole rubber provided for one batch can be easily cut, the kneading power consumption of the kneader is significantly reduced and kneading speed is improved, thereby largely contributing to improvement in productivity of kneading process.

### [Reference Signs List]

- 2: cylindrical fixed barrel
- 3: in-barrel rotary member
- 4: rotation drive mechanism
- 5A, 5B: rubber bale supplying mechanism
- 6: measuring feeder
- 9: rubber bale
- 9a: rubber cut piece
- 21A, 21B: barrel side supply port
- 22: ejection port
- 25: receiving blade
- 32: rotary blade
- 35: inner supply port
- 51d: drive mechanism
- 54A, 54B: pressure mechanism

## Claims

1. A rubber bale cutting method, wherein one or a plurality of barrel side supply ports for supplying a rubber bale to be cut is disposed on a side face of a barrel wall of a cylindrical fixed barrel having a horizontally positioned axis, and the cylindrical fixed barrel is provided with an ejection port for a rubber cut piece on a lower part of the barrel, and an in-barrel rotary member which rotates by a rotation drive mechanism while being in internal contact with the cylindrical fixed barrel,
the in-barrel rotary member is provided with an inner supply port for receiving the rubber bale from the barrel side supply port when it opposes the barrel side supply port as the in-barrel rotary member rotates in the cylindrical fixed barrel, and a rotary blade for cutting the rubber bale which is fed into the in-barrel rotary member via the inner supply port is disposed on the rim of the inner supply port on a side which follows the movement of the inner supply ports during rotation of the in-barrel rotary member so that the rotary blade opposes the receiving blade which is disposed on the rim of the barrel side supply port on the side that the rotary blade comes closer after passing the inner side of the barrel side supply port of the cylindrical fixed barrel, and
the rubber bale is supplied from the barrel side supply port of the cylindrical fixed barrel and the in-barrel rotary member is rotated in the cylindrical fixed barrel by the rotation drive mechanism, and when the in-barrel rotary member rotates, the rubber bale supplied from the barrel side supply port of the cylindrical fixed barrel is cut while being shaved off by a rotary blade which rotates along an inner cylindrical surface of the barrel side supply port, and the rubber cut pieces which have been cut off is sequentially ejected from the ejection port of the cylindrical fixed barrel.

2. The rubber bale cutting method according to claim 1, wherein the barrel side supply ports for the rubber bale of the cylindrical fixed barrel are disposed on a pair of opposed barrel walls, the in-barrel rotary member is provided with the inner supply port for receiving the rubber bale from the barrel side supply ports when they oppose a pair of barrel side supply ports as the in-barrel rotary member makes a half turn in the cylindrical fixed barrel, and
the rubber bale is supplied from the pair of barrel side supply ports of the cylindrical fixed barrel and the rubber bale supplied from the barrel side supply ports which oppose the cylindrical fixed barrel while the in-barrel rotary member makes a half turn by the rotation drive mechanism.

3. The rubber bale cutting method according to claim 1 or 2, wherein a rubber bale supplying mechanism for supplying the rubber bale to be cut into the barrel side supply port is disposed on the outside of the barrel side supply port of the cylindrical fixed barrel, and the rubber bale of a predetermined length is supplied into the in-barrel rotary member when the barrel side supply port for the rubber bale of the cylindrical fixed barrel overlaps the inner supply port of the in-barrel rotary member by intermittently driving a conveyer which forms the rubber bale supplying mechanism and becomes a state in which the rubber bale can be supplied into the in-barrel rotary member, and after that, the rubber bale is cut by the rotary blade of the in-barrel rotary member in the state in which the supply of the rubber bale stops.

4. A rubber bale cutting device, wherein a cylindrical fixed barrel having a horizontally positioned axis is provided as an outer barrel and is provided with one or a plurality of barrel side supply ports for supplying a rubber bale to be cut disposed on a side face of a barrel wall and an ejection port for a rubber cut piece on a lower part of the barrel,
an in-barrel rotary member which is connected to a rotation drive mechanism and rotates while being in internal contact with the cylindrical fixed barrel is provided with an inner supply port for receiving the rubber bale from the barrel side supply port when it opposes the barrel side supply port as the in-barrel rotary member rotates in the cylindrical fixed barrel,
a rotary blade for cutting the rubber bale which is fed into the in-barrel rotary member via the inner supply port is disposed on the rim of the inner supply port on a side which follows the movement of the inner supply ports during rotation of the in-barrel rotary member, and a receiving blade which opposed the rotary blade is disposed on the rim of the barrel side supply port on the side that the rotary blade comes closer after passing the inner side of the barrel side supply port of the cylindrical fixed barrel, so that the rubber bale supplied from the barrel side supply port can be cut while being shaved off by a rotary blade which rotates along an inner cylindrical surface of the barrel side supply port of the cylindrical fixed barrel while the in-barrel rotary member rotates, and
a rubber bale supplying mechanism for supplying the rubber bale to be cut into the barrel side supply port is disposed on the outer side of the barrel side supply port of the cylindrical fixed barrel.

5. The rubber bale cutting device according to claim 4, wherein the barrel side supply ports for the rubber bale of the cylindrical fixed barrel are disposed on a pair of opposed barrel walls, the in-barrel rotary member is provided with the inner supply port for receiving the rubber bale from the barrel side supply ports when they oppose a pair of barrel side supply ports as the in-barrel rotary member makes a half turn in the cylindrical fixed barrel, and
the rubber bale supplying mechanism is disposed on the outer side of the pair of barrel side supply ports of the cylindrical fixed barrel.

6. The rubber bale cutting device according to claim 4, wherein the barrel side supply ports for the rubber bale of the cylindrical fixed barrel are disposed on a pair of opposed barrel walls, the in-barrel rotary member is provided with the inner supply port for receiving the rubber bale from the barrel side supply ports at each of three equally spaced positions when they oppose a pair of barrel side supply ports as the in-barrel rotary member makes a one third turn in the cylindrical fixed barrel and the rotary blade is disposed on the rim of the inner supply port on a side which follows the movement of the inner supply ports, and
the rubber bale supplying mechanism is disposed on the outer side of the pair of barrel side supply ports of the cylindrical fixed barrel.

7. The rubber bale cutting device according to claim 5, wherein the rotation drive mechanism of the in-barrel rotary member is formed of a mechanism that converts a reciprocating thrust of the fluid pressure cylinder into a rotational movement via the crank mechanism, and the crank mechanism is connected to the in-barrel rotary member so as to transmit the rotation with dead points provided when a pair of rotary blade are located at the top and bottom of the in-barrel rotary member.

8. The rubber bale cutting device according to any one of claims 4 to 7, wherein the rubber bale supplying mechanism which is provided on the outer side of the barrel side supply port of the cylindrical fixed barrel is formed of a pair of upper and lower conveyers that supplies the rubber bale to the barrel side supply port while holding the rubber bale from upper and lower sides.

9. The rubber bale cutting device according to claim 8, wherein in the pair of upper and lower conveyers that forms the rubber bale supplying mechanism, one of the conveyers is provided as a driving conveyer which has a drive mechanism that is driven in a direction of supplying the rubber bale, and the other of the conveyers is provided as a driven conveyer which moves as movement of the rubber bale.

10. The rubber bale cutting device according to claim 8 or 9, wherein a drive mechanism of the conveyer and/or a rotation drive mechanism of the in-barrel rotary member is each capable of adjusting an intermittent driving or adjusting a speed, thereby adjusting a thickness of the rubber cut pieces and a cutting speed.

11. The rubber bale cutting device according to claim 8 or 9, wherein the drive mechanism of the conveyer which forms the rubber bale supplying mechanism is capable of controlling the intermittent driving, and the rubber bale of a predetermined length is supplied into the in-barrel rotary member when the barrel side supply port for the rubber bale of the cylindrical fixed barrel overlaps the inner supply port of the in-barrel rotary member by intermittently driving a conveyer which forms the rubber bale supplying mechanism and becomes a state in which the rubber bale can be supplied into the in-barrel rotary member, and after that, the supply of the rubber bale stops while the rubber bale supplied by rotation of the in-barrel rotary member is cut.

12. The rubber bale cutting device according to claim any one of claims 4 to 11, wherein a measuring feeder for measuring a weight of the rubber cut piece ejected from the ejection port is disposed immediately under the ejection port for the rubber cut piece on the lower part of the cylindrical fixed barrel.
